# FASCICULE DE BREVET EUROPEEN

(11) **EP 2 630 379 B1**
(45) Date de publication et mention de la délivrance du brevet: **26.11.2014**
(21) Numéro de dépôt: 11767736.9
(22) Date de dépôt: 12.10.2011
(51) Int. Cl.: F16C 11/06, F16C 11/12, B64G 1/66, F16M 11/12, H01Q 1/28, H01Q 1/12

(54) **CARDAN FLEXIBLE COMPACT ET ENGIN SPATIAL COMPORTANT UN TEL CARDAN**
KOMPAKTES FLEXIBLES KARDANGELENK UND RAUMFAHRZEUG MIT EINEM DERARTIGEN GELENK
COMPACT FLEXIBLE CARDAN JOINT AND SPACECRAFT COMPRISING SUCH A JOINT

(30) Priorité: 22.10.2010 FR 1004156
(43) Date de publication de la demande: 28.08.2013
(73) Titulaire: Thales, 92200 Neuilly-sur-Seine (FR)
(72) Inventeur: BAUDASSE, Yannick, F-06130 Grasse (FR)
(74) Mandataire: Nguyen, Dominique
(86) Numéro de dépôt international: PCT/EP2011/067836
(87) Numéro de publication internationale: WO 2012/052337

(56) Documents cités:
- EP-A1- 0 449 001
- US-A- 2 950 079
- US-A1- 2007 241 244

## Description

La présente invention concerne un cardan flexible compact apte à guider un équipement en rotation autour de deux axes orthogonaux et un engin spatial comportant un tel cardan. Elle s'applique notamment au domaine des engins spatiaux tels que des satellites pour le guidage fin en rotation d'au moins un élément ou un équipement de l'engin spatial pour l'orienter dans une direction de pointage prédéterminée.

Un tel cardan est connu du document US 2007/0241244 A.

Dans les applications spatiales, il est nécessaire de pouvoir orienter certains éléments, tels que par exemple une antenne, un mât ou un équipement, d'un satellite ou d'un véhicule spatial, dans une direction prédéterminée afin, par exemple, de les pointer vers une cible externe telle qu'une planète, un récepteur, ou un émetteur, de conserver un pointage vers un point à la surface de la terre ou bien encore de balayer une zone particulière à la surface de la terre ou d'un astre quelconque. Ces positionnements doivent être fréquemment corrigés, notamment lors des phases de poursuite d'une cible, pour compenser d'inévitables dérives dans la tenue de cette direction et ces multiples corrections entraînent la réalisation d'un nombre important de cycles de micro-rotation pour ces appendices spatiaux et pour leurs dispositifs de guidage.

Compte tenu du caractère irréversible de la mise en orbite d'un satellite, il est nécessaire de prévoir lors de la conception de l'engin spatial, une durée de vie, mesurée en nombre de cycles (un cycle correspondant à une oscillation en rotation), très importante pour ces dispositifs de guidage, de façon à garantir leur capacité à résister aux très nombreuses sollicitations auxquelles ils sont soumis. Par exemple la durée de vie souhaitée peut être supérieure à 300000 cycles pour des mécanismes de poursuite. D'autres exigences des dispositifs de guidage sont une forte capacité de tenue mécanique notamment vis-à-vis des efforts extérieurs et des moments de flexion exercés sur l'arbre guidé, une forte rigidité transverse, un guidage sans jeu de grande précision, une amplitude de rotation importante pour des éléments flexibles, typiquement de l'ordre de 5 à 10°, dans les deux sens positif et négatif, et un couple résistant faible et constant.

Les mécanismes de guidage connus sont montés sur des roulements ou sur des paliers et nécessitent des lubrifiants pour assurer un bon fonctionnement. Ces mécanismes de guidage sont non flexibles et comportent un nombre important de pièces ce qui entraîne une fiabilité réduite par rapport à un cardan flexible. En outre, ces éléments de guidage non flexibles sont sensibles aux charges extérieures et aux chocs lors du lancement de l'engin spatial. De plus ils nécessitent une lubrification spécifique sensible aux micro déplacements et aux températures extrêmes.

Il est connu de réaliser un cardan flexible constitué de quatre pivots flexibles simples montés deux par deux en deux paliers différents, les quatre pivots définissant deux axes de rotation orthogonaux. Les deux paliers sont liés entre eux par une partie intermédiaire flottante et les deux axes de rotation sont actionnés par des mécanismes de motorisation situés à l'intérieur des deux paliers. Cependant ce cardan nécessite l'utilisation de deux pivots par axe de rotation et un assemblage de trois parties différentes qu'il est difficile d'imbriquer entre elles. En outre, ce cardan présente un encombrement important et un poids élevé dû notamment à l'utilisation de quatre pivots différents et à des structures annulaires volumineuses liant ces différents éléments entre eux. Ce cardan n'est donc pas applicable au pointage fin de petits appendices.

Le but de l'invention est de réaliser un cardan flexible ne comportant pas les inconvénients des dispositifs existants et notamment de réaliser un cardan qui soit compact, léger, constitué d'un minimum d'éléments et capable de reprendre des charges au lancement, typiquement 2000N combiné suivant 3 axes, à forte capacité angulaire et forte durée de vie et applicable en particulier au pointage fin des petites antennes, typiquement de l'ordre de 50 cm à 1 m.

Pour cela, l'invention concerne un cardan flexible compact qui comporte un axe longitudinal central Z creux, deux pivots creux montés orthogonalement l'un par rapport à l'autre et aptes à pivoter respectivement autour d'un axe de rotation X, Y, les trois axes X, Y, Z étant orthogonaux entre eux et se coupant en un point de rotation situé au centre du cardan. Chaque pivot comporte un cadre externe annulaire s'étendant selon un plan contenant l'axe longitudinal central Z et orthogonal à l'axe de rotation X, respectivement Y, du pivot, une bague interne creuse coaxiale au cadre externe et plusieurs jeux de lames flexibles reliées au cadre externe et à la bague interne, les deux pivots étant reliés entre eux par des pièces de liaison rigides.

Préférentiellement, les deux pivots du cardan et les pièces de liaison sont réalisés dans une pièce monobloc.

Selon un premier mode de réalisation du cardan, la bague interne de chaque pivot est montée flottante, le cadre externe de chaque pivot est constitué d'une première partie de cadre intermédiaire contenant l'axe Z et de deux parties de cadre extérieures situées parallèlement et de part et d'autre de la partie de cadre intermédiaire, et les deux pièces de liaison ont un axe longitudinal central creux coïncidant avec l'axe Z et sont reliées aux parties de cadre intermédiaires de chaque pivot.

Le cardan conforme au premier mode de réalisation peut comporter deux pièces mécaniques de liaison en forme de croix, les deux premiers bras de chaque croix, étant diamétralement opposés l'un par rapport à l'autre et fixés sur la partie de cadre intermédiaire du premier pivot, et les deux seconds bras de chaque croix étant diamétralement opposés l'un par rapport à l'autre et fixés sur la partie de cadre intermédiaire du deuxième pivot.

Alternativement, le cardan peut comporter deux pièces mécaniques de liaison en forme de pavé annulaire, chaque pavé annulaire étant solidaire des deux parties de cadre intermédiaires respectives du premier pivot et du deuxième pivot.

Selon un deuxième mode de réalisation du cardan, le cadre externe de chaque pivot est monté flottant, la bague interne de chaque pivot est constituée d'une partie de bague intermédiaire contenant l'axe Z et de deux parties de bague extérieures situées parallèlement et de part et d'autre de la partie de bague intermédiaire, et les deux parties de bague extérieures du pivot sont respectivement solidaires des deux parties de bague extérieures du pivot et lient d'une manière rigide les deux pivots entre eux.

De préférence, les quatre parties de bague extérieures des deux pivots forment un ensemble monobloc commun aux deux pivots.

L'invention concerne aussi un engin spatial comportant un tel cardan.

D'autres particularités et avantages de l'invention apparaîtront clairement dans la suite de la description donnée à titre d'exemple purement illustratif et non limitatif, en référence aux dessins schématiques annexés qui représentent :
- figures 1a, 1b : deux vues en perspective d'un premier exemple de cardan flexible compact, selon un premier mode de réalisation de l'invention ;
- figures 1c, 1d: deux vues en perspective d'un deuxième exemple de cardan flexible compact, selon une variante de réalisation de l'invention ;
- figure 2 : un schéma d'un exemple de structure d'un exemple de pivot d'un cardan dans un plan XZ perpendiculaire à l'axe Y de rotation du pivot, selon l'invention ;
- figures 3a à 3d : quatre vues schématiques illustrant le fonctionnement du cardan des figures 1c et 1d, selon l'invention ;
- figures 4a et 4b : deux exemples d'aménagement des jeux de lames flexibles d'un pivot du cardan, selon l'invention ;
- figure 5: une vue en perspective d'un deuxième exemple de cardan flexible compact selon un deuxième mode de réalisation de l'invention ;
- figure 6 : un exemple d'application du cardan à l'orientation d'un réflecteur d'une antenne, selon l'invention.

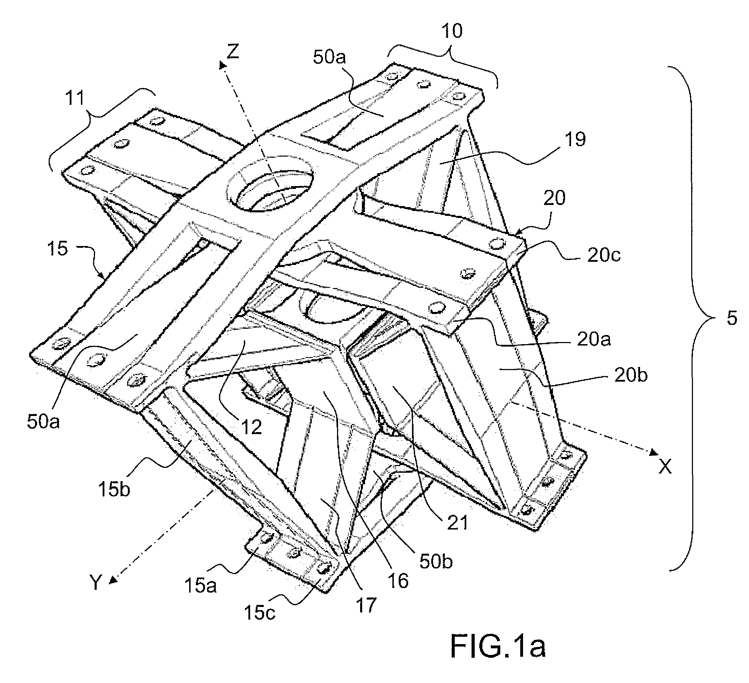

L'exemple de cardan 5 représenté sur les figures 1a à 1d est creux le long d'un axe Z longitudinal et central. Il comporte deux pivots creux 10, 11 à lames flexibles 12, 17, 18, 19 à double étage disposés orthogonalement l'un par rapport à l'autre. Chaque pivot creux 10, 11 s'étend selon un plan contenant l'axe longitudinal Z et orthogonal à l'axe de rotation X, respectivement Y, dudit pivot, les axes de rotation X, Y de chaque pivot étant perpendiculaires entre eux et perpendiculaires à l'axe longitudinal Z. Les trois axes X, Y, Z du cardan se coupent en un point de rotation situé au centre du cardan. De préférence, les deux pivots sont réalisés en une seule pièce monobloc. Alternativement, les deux pivots 10, 11 peuvent être constitués de deux pièces séparées reliées fixement entre elles.

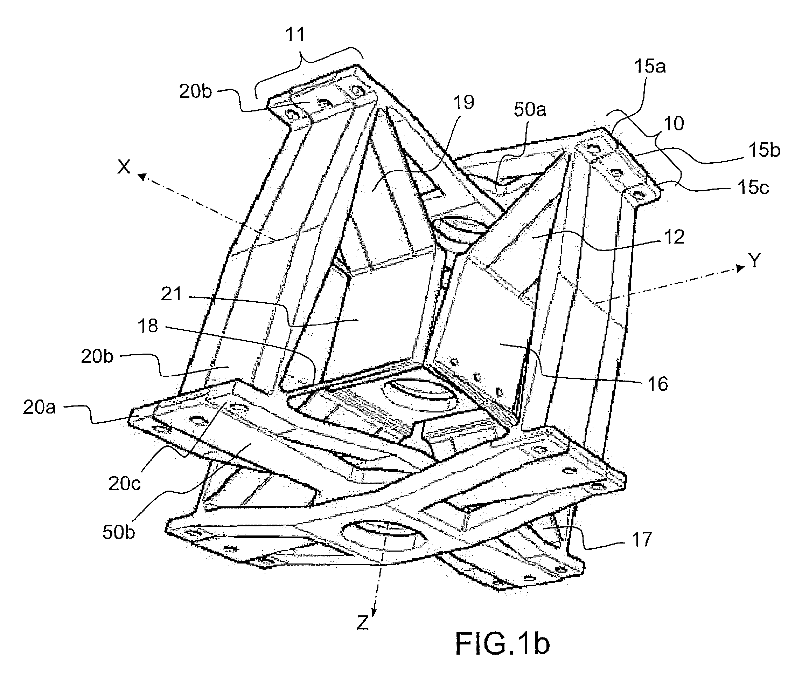

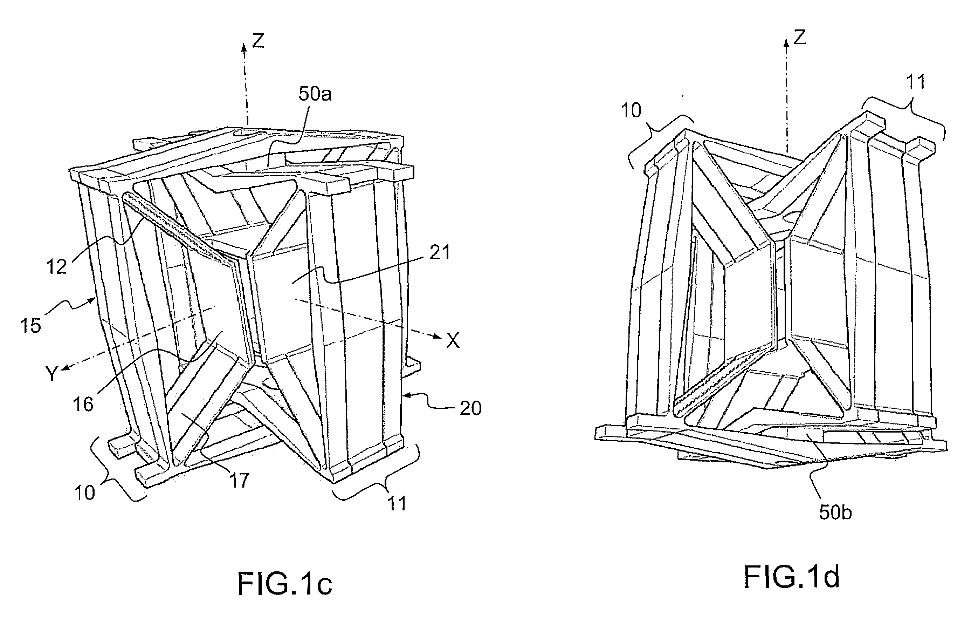

Sur les exemples de réalisation représentés sur les figures 1 a à 1 d, les deux pivots sont reliés entre eux par l'intermédiaire de deux pièces mécaniques de liaison, respectivement supérieure 50a et inférieure 50b, chaque pièce mécanique de liaison 50a, 50b étant rigide et ayant un axe longitudinal central creux coïncidant avec l'axe Z. Chaque pièce mécanique de liaison 50a, 50b peut par exemple, comme représenté sur les figures 1a et 1b, avoir une forme de croix comportant un axe longitudinal central creux et quatre bras radiaux rigides disposés angulairement autour de l'axe longitudinal central ou comme représenté sur la figure 1d, avoir une forme de pavé ayant un axe longitudinal central creux, le pavé pouvant par exemple être cylindrique ou parallélépipédique. Dans un mode de réalisation préférentiel, les deux pivots 10, 11 et les deux pièces mécaniques de liaison 50a, 50b, de forme pavé, sont réalisés dans une seule pièce monobloc.

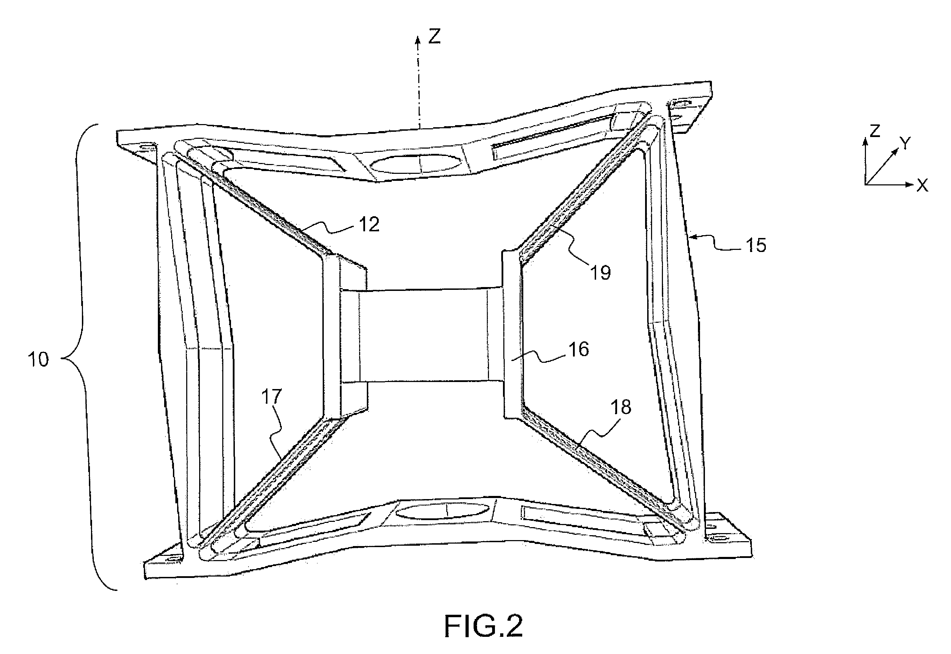

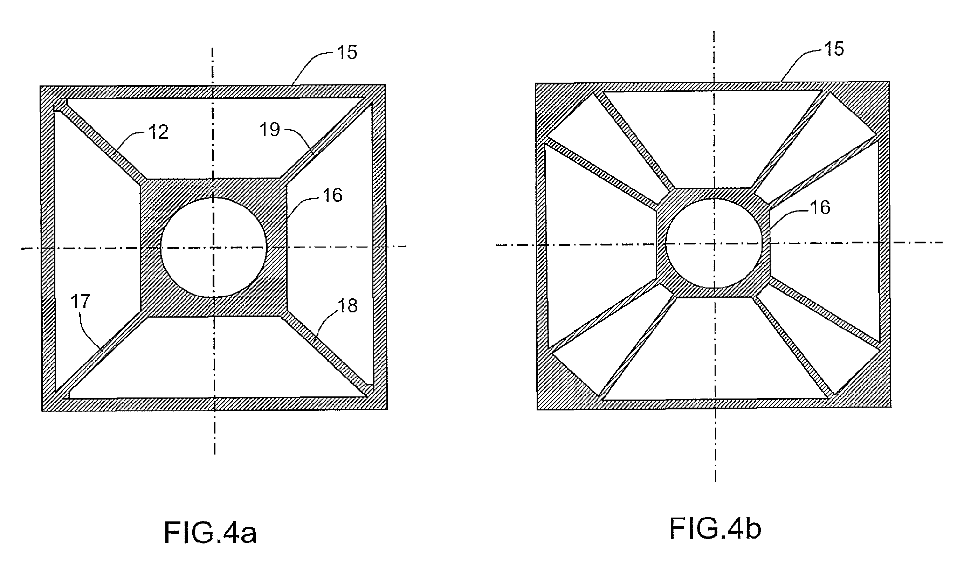

Selon le premier mode de réalisation de l'invention, comme représenté sur la figure 2, chaque pivot 10, 11 est constitué d'un cadre externe annulaire 15, 20 s'étendant selon un plan contenant l'axe longitudinal Z et orthogonal à l'axe de rotation du pivot, d'une bague flottante interne creuse 16, 21 coaxiale au cadre externe 15, 20 et de plusieurs jeux de lames flexibles 12, 17, 18, 19 reliées au cadre externe 15, 20 et à la bague flottante interne 16, 21. Dans le cas d'un pivot à double étages, comme représenté sur la figure 2, le cadre externe 15, 20 de chaque pivot 10, 11 comporte, dans son épaisseur selon une direction perpendiculaire à l'axe Z, trois parties distinctes 15a, 15b, 15c, 20a, 20b, 20c disposées selon trois plans parallèles entre eux et orthogonaux à l'axe de rotation du pivot. Les trois parties distinctes du cadre externe 15, 20 sont constituées d'une première partie de cadre intermédiaire 15b, 20b contenant l'axe Z et de deux parties de cadre extérieures 15a, 15c, respectivement 20a, 20c, situées symétriquement de part et d'autre de la partie de cadre intermédiaire 15b, respectivement 20b. Chaque partie du cadre externe 15, 20 est reliée à la bague flottante interne 16, 21 par plusieurs jeux de lames flexibles 12, 17, 18, 19 réparties angulairement. A titre d'exemple non limitatif, comme représenté sur les schémas des figures 1 a à 1 d, 2 et sur la figure 4a, chaque pivot 10, 11 peut comporter quatre jeux 12, 17, 18, 19 de trois lames flexibles dont une première extrémité est reliée au cadre externe 15, 20 et une deuxième extrémité est reliée à la bague flottante interne 16, 21. Les deux parties de cadre extérieures 15a, 15c, respectivement 20a, 20c sont reliées à la bague flottante interne 16, 21 par l'intermédiaire d'une première et d'une deuxième lames flexibles de chacun des quatre jeux de trois lames flexibles. La partie de cadre intermédiaire 15b, 20b est reliée à la bague flottante 16, 21 par une troisième lame flexible de chacun des quatre jeux de trois lames flexibles. Alternativement, le nombre de jeux de lames flexibles peut être différent de quatre, en particulier, comme représenté sur la figure 4b, le nombre de jeux de lames flexibles peut être, par exemple, égal à huit.

Le cadre externe 15, 20 et la bague flottante interne 16, 21 peuvent par exemple avoir une section de forme cylindrique ou polygonale, telle que par exemple rectangulaire comme représenté sur les différentes figures. Les lames flexibles 12, 17, 18, 19 peuvent être disposées selon une direction radiale du pivot 10, 11 et converger sur l'axe longitudinal Z du cardan. Alternativement, les lames flexibles peuvent être inclinées selon une direction formant un angle d'inclinaison non nul par rapport à la direction radiale du pivot.

Sur les exemples représentés sur les figures 1 a à 1d, les deux pivots 10, 11 du cardan sont disposés orthogonalement l'un par rapport à l'autre, les axes de rotation X et Y des deux pivots 10, 11 étant perpendiculaires entre eux. Pour cela, les dimensions des différentes parties constituant les deux pivots sont aménagées pour que les deux pivots du cardan s'imbriquent l'un dans l'autre au niveau d'une région centrale de révolution autour de l'axe Z, les deux axes de rotation X et Y des deux pivots convergeant au centre du cardan situé sur l'axe Z. Ainsi, la bague flottante interne 21 du pivot 11 a des dimensions périphériques supérieures à celle du pivot 10 de façon que la bague flottante interne 21 du pivot 11 soit montée autour de la bague flottante 16 du pivot 10 sans qu'il y ait de contact entre les deux bagues flottantes 16, 21. Par ailleurs, le cadre externe 20 du pivot 11 comporte une partie inférieure et une partie supérieure concaves alors que le cadre externe 15 du pivot 10 comporte une partie inférieure et une partie supérieure convexes de façon que le cadre externe 15 du pivot 10 soit monté autour du cadre externe 20 du pivot 11. En outre, les deux pivots 10, 11 sont reliés orthogonalement entre eux par l'intermédiaire des deux pièces mécaniques rigides 50a, 50b, respectivement supérieure et inférieure, montées entre les parties convexes et concaves supérieures des deux pivots 10, 11 et respectivement entre les parties convexes et concaves inférieures des deux pivots 10, 11. Sur les figures 1 a et 1 b, les deux pièces mécaniques de liaison 50a, 50b comportent quatre bras disposés en forme de croix. Les deux bras de chaque croix, diamétralement opposés l'un par rapport à l'autre, sont fixés sur la partie de cadre intermédiaire 15b du premier pivot 10, les deux autres bras de chaque croix, diamétralement opposés l'un par rapport à l'autre, sont fixés sur la partie de cadre intermédiaire 20b du deuxième pivot 11. Sur les figures 1c et 1d, les deux pièces mécaniques de liaison 50a, 50b sont en forme de pavé annulaire, chaque pavé annulaire étant solidaire des deux parties de cadre intermédiaires respectives 15b, 20b du premier pivot 10, et du deuxième pivot 11. Le cardan peut alors tourner en rotation autour du point de croisement des trois axes X, Y, Z.

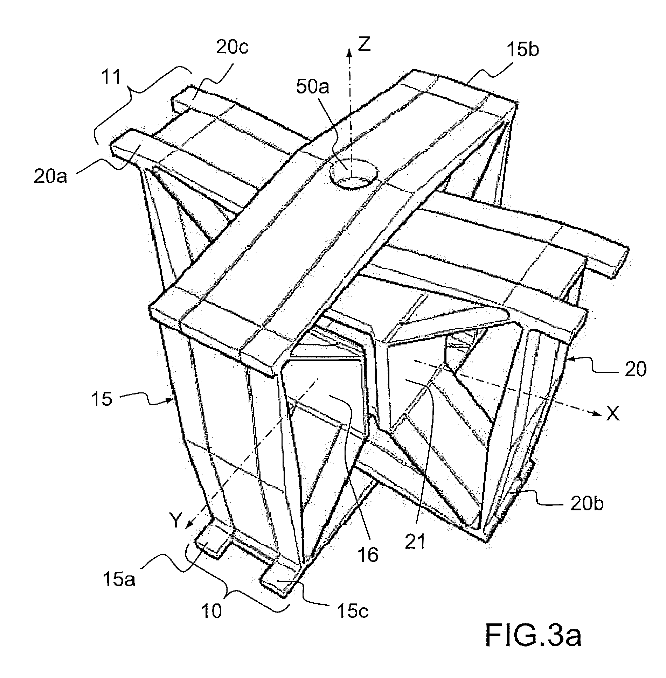

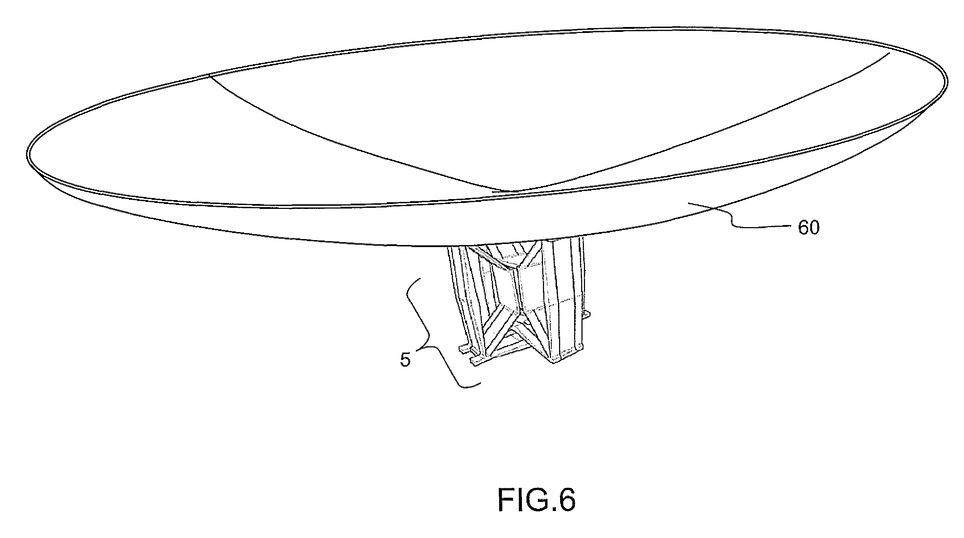

Le fonctionnement du cardan selon l'exemple de réalisation des figures 1c et 1d est représenté schématiquement sur les figures 3a à 3d. Le deuxième pivot 11 a un axe de rotation orienté selon la direction Y et le premier pivot 10 a un axe de rotation orienté selon la direction X. Dans l'exemple représenté, il est supposé que les parties de cadre extérieures 20a, 20c du deuxième pivot 11 sont fixées, dans leur partie supérieure, à un élément à orienter, par exemple un réflecteur 60 d'une antenne comme représenté sur la figure 6, et que les parties de cadre extérieures 15a, 15c du premier pivot 10 sont fixées, dans leur partie inférieure, sur une structure de support, par exemple un satellite,

Sur la figure 3a, le cardan est dans une position de repos, les trois parties du cadre 15, 20 de chaque pivot 10, 11 sont superposées selon l'axe de rotation du pivot correspondant et les lames flexibles sont au repos.

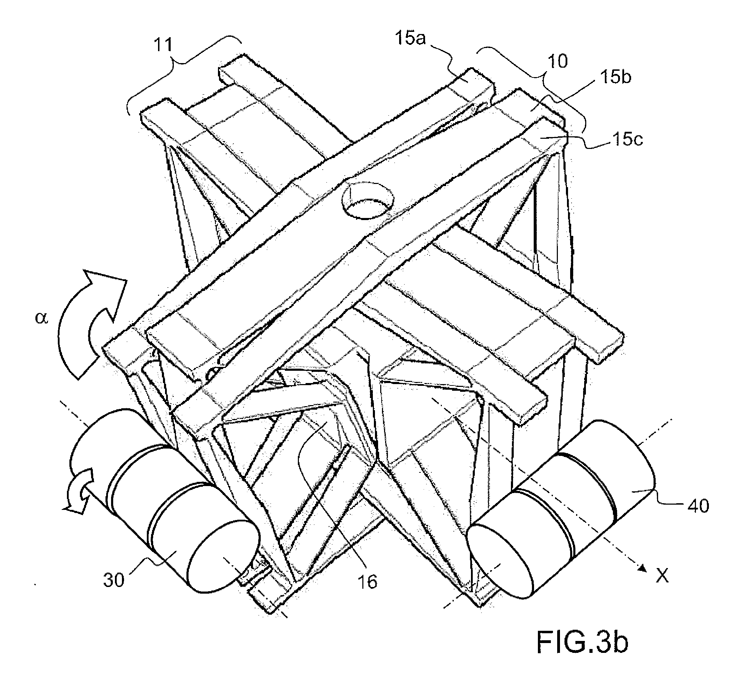

Dans la figure 3b, la partie de cadre intermédiaire 15b du pivot 10 est actionnée en rotation d'un angle α choisi, par exemple compris entre -8° et +8°, autour de l'axe X, par exemple au moyen d'un actionneur ou d'un moteur 30. Le mouvement de rotation de la partie de cadre intermédiaire 15b est transmis, par l'intermédiaire des lames flexibles, à la bague flottante interne 16 du pivot 10 qui n'est liée à aucun autre élément et est libre de suivre le mouvement de rotation de la partie de cadre intermédiaire 15b. Le mouvement de rotation de la bague flottante interne 16 est alors transmis dans les lames flexibles liées aux deux parties de cadre extérieures 15a, 15c du pivot 10. Ces parties de cadre extérieures 15a, 15c étant fixées sur un support, elles ne bougent pas et les lames flexibles qui leurs sont reliées fléchissent. Par ailleurs, les deux parties de cadre intermédiaires 15b, 20b des deux pivots 10, 11, étant liées entre elles, par l'intermédiaire des deux pièces mécaniques de liaison 50a, 50b, la rotation de la partie de cadre intermédiaire 15b du premier pivot 10 autour de l'axe X provoque le basculement, d'un même angle α, de l'ensemble du deuxième pivot 11 autour de l'axe X.

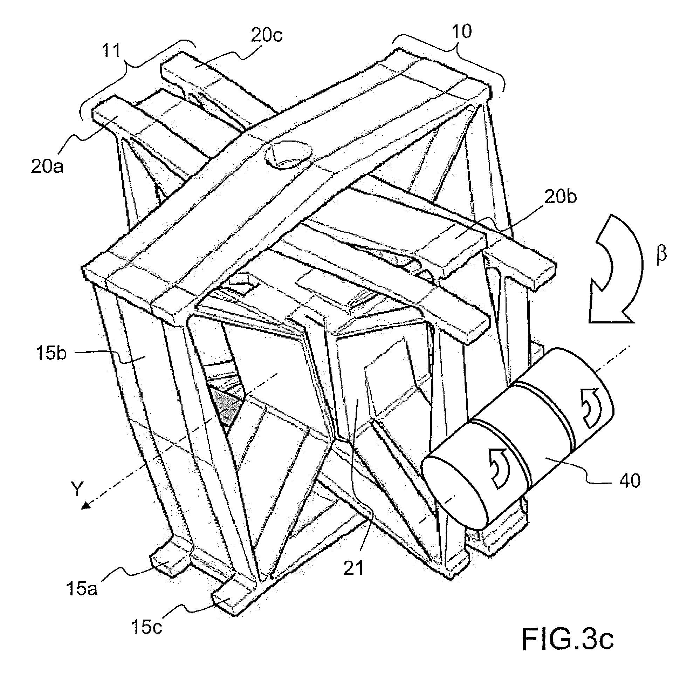

Sur la figure 3c, les deux parties de cadre extérieures 20a, 20c du deuxième pivot 11 sont actionnées en rotation d'un angle β choisi, par exemple compris entre -8° et +8°, autour de l'axe Y, par exemple au moyen d'un actionneur ou d'un moteur 40. Le mouvement de rotation des deux parties de cadre extérieures 20a, 20c est transmis, par l'intermédiaire des lames flexibles, à la bague flottante interne 21 du deuxième pivot 11 qui n'est liée à aucun autre élément et est libre de suivre le mouvement de rotation des deux parties de cadre extérieures 20a, 20c. Le mouvement de rotation de la bague flottante 21 est alors transmis dans les lames flexibles liées à la partie de cadre intermédiaire 20b du deuxième pivot 11. Cette partie de cadre intermédiaire 20b étant fixée à la partie de cadre intermédiaire 15b du premier pivot 10 par les deux pièces mécaniques de liaison 50a, 50b, et le premier pivot 10 ne bougeant pas, la partie de cadre intermédiaire 20b ne bouge pas et les lames flexibles qui lui sont reliées fléchissent. Seules les deux parties de cadre extérieures 20a, 20c du deuxième pivot 11 subissent donc le mouvement de rotation de l'angle β, ce qui permet d'orienter l'élément fixé sur ces parties extérieures 20a, 20c par rapport à l'axe Y.

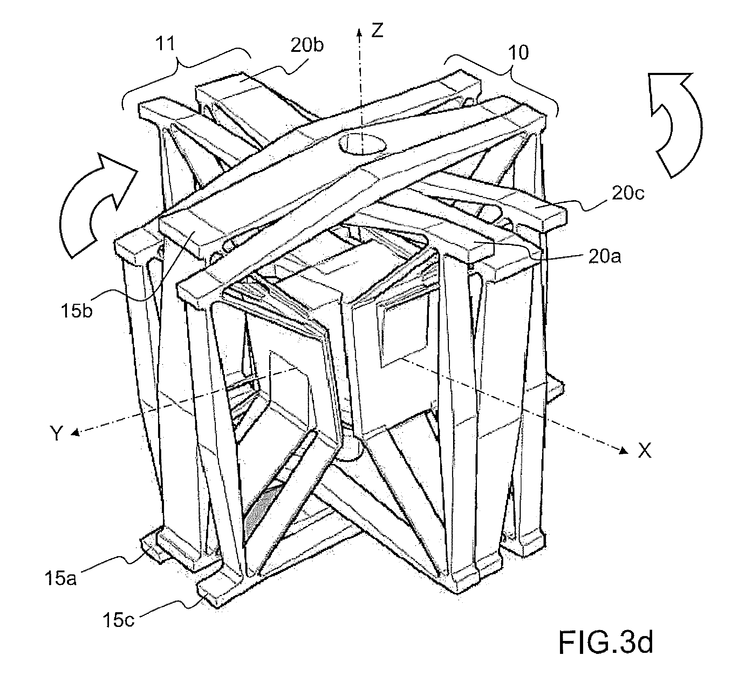

Dans la figure 3d, les deux pivots 10, 11 sont actionnés en rotation, simultanément ou successivement, par des actionneurs respectifs 30, 40, autour de leur axe respectif X ou Y, ce qui permet d'orienter l'élément fixé sur les parties de cadre extérieures 20a, 20c du pivot 11 par rapport aux deux axes X et Y. Les mouvements de rotation combinés des deux pivots 10, 11 du cardan sont réalisés comme décrit ci-dessus pour les figures 3b et 3c. L'élément monté sur le cardan peut alors être orienté dans n'importe quelle position choisie suivant la capacité angulaire des deux pivots du cardan. Par exemple, si les angles α et β sont compris entre -8° et +8° comme décrit ci-dessus, le cardan permet de couvrir une région située dans un cône de révolution ayant une ouverture angulaire comprise entre -8° et +8°.

Toutes les pièces constituant le cardan sont creuses le long de l'axe longitudinal Z du cardan. Le cardan est donc creux le long de l'axe Z ce qui permet de pouvoir aménager des câbles ou des guides d'onde à l'intérieur du cardan, le long de l'axe Z.

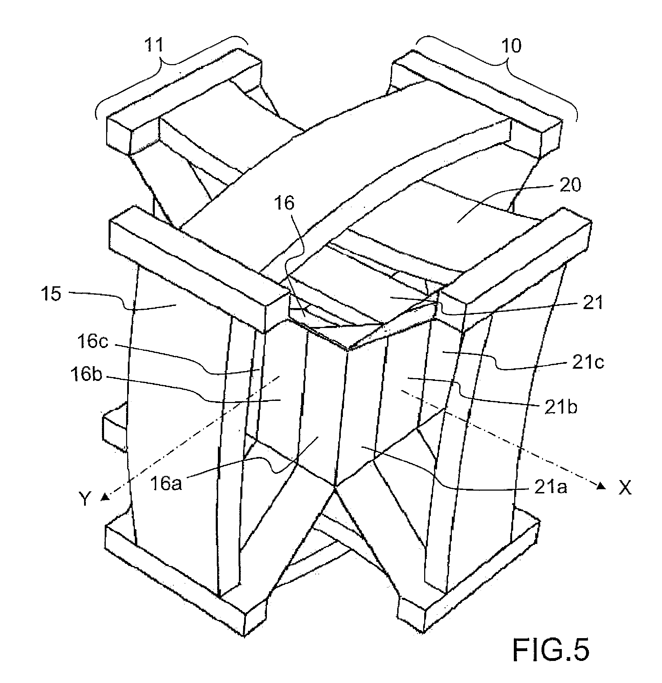

La figure 5 représente un deuxième mode de réalisation du cardan dans lequel les fonctions du cadre externe et de la bague interne de chaque pivot sont inversées. Selon ce deuxième mode de réalisation, chaque pivot 10, 11 du cardan comporte un cadre externe 15, 20 monté flottant et une bague interne 16, 21 constituée d'une partie de bague intermédiaire 16b, 21 b contenant l'axe Z et de deux parties de bague extérieures 16a, 16c situées parallèlement et symétriquement de part et d'autre de la partie de bague intermédiaire 16b. Chaque partie de la bague interne 16, 21 est reliée au cadre flottant externe 15, 20 par l'intermédiaire de plusieurs jeux de trois lames flexibles. Les deux parties de bague extérieures 16a, 16c du pivot 10 sont respectivement solidaires des deux parties de bague extérieures 21a, 21 c du pivot 11 et constituent des liaisons rigides communes liant les deux pivots 10, 11 entre eux. De préférence, les quatre parties de bague extérieures 16a, 16c, 21a, 21c des deux pivots forment un ensemble monobloc commun aux deux pivots 10, 11.

Sur la figure 5, le pivot 11, imbriqué dans le pivot 10, a un axe de rotation orienté selon la direction Y et le pivot 10, monté autour du pivot 11, a un axe de rotation orienté selon la direction X.

Dans cet exemple , il est supposé que la partie de bague intermédiaire 21 b du pivot 11 est fixée, dans la partie supérieure du cardan, à un élément à orienter, par exemple un réflecteur 60 d'une antenne comme représenté sur la figure 6, et que la partie de bague intermédiaire 15b du pivot 10 est fixée, dans la partie inférieure du cardan, sur une structure de support, par exemple un satellite.

Pour réaliser une rotation de l'élément à orienter autour de l'axe Y , la partie intermédiaire 21b de la bague interne 21 du pivot 11 est actionnée en rotation d'un angle choisi par rapport aux parties extérieures solidaires 16a, 16c, 21a, 21 c des deux bagues internes des deux pivots 10, 11. Le mouvement de rotation de la partie de bague intermédiaire 21b du pivot 11 est transmis, par l'intermédiaire des lames flexibles, au cadre flottant externe 20 du pivot 11 qui n'est lié à aucun autre élément et est libre de suivre le mouvement de rotation transmis par la partie de bague intermédiaire 21 b. Le mouvement de rotation du cadre flottant 20 est alors transmis dans les lames flexibles liées aux parties de bague extérieures solidaires 16a, 16c, 21 a, 21c du pivot 11 et du pivot 10.

Pour réaliser une rotation de l'élément à orienter autour de l'axe X, les parties de bague extérieures solidaires 16a, 16c, 21a, 21c du pivot 11 et du pivot 10 sont actionnées en rotation d'un angle choisi par rapport à la partie de bague intermédiaire 15b du pivot 10 qui reste fixe. Le mouvement de rotation des parties de bague extérieures solidaires 16a, 16c, 21a, 21c est transmis, par l'intermédiaire des lames flexibles, au cadre flottant externe 15 du pivot 10 qui n'est lié à aucun autre élément et est libre de suivre le mouvement de rotation des parties de bague extérieures solidaires 16a, 16c, 21a, 21c. Le mouvement de rotation du cadre flottant externe 15 est alors transmis au reste du cardan.

## Revendications

1. Cardan flexible compact, comportant un axe longitudinal central Z creux, deux pivots creux (10, 11) montés orthogonalement l'un par rapport à l'autre et aptes à pivoter respectivement autour d'un axe de rotation X, Y, les trois axes X, Y, Z étant orthogonaux entre eux et se coupant en un point de rotation situé au centre du cardan, chaque pivot (10, 11) comportant un cadre externe annulaire (15, 20) s'étendant selon un plan contenant l'axe longitudinal central Z et orthogonal à l'axe de rotation X, respectivement Y, du pivot, une bague interne creuse (16, 21) coaxiale au cadre externe et plusieurs jeux de lames flexibles (12, 17, 18, 19) reliées au cadre externe (15, 20) et à la bague interne (16, 21), et les deux pivots (10, 11) étant reliés entre eux par des pièces de liaison rigides (50a, 50b, 16a, 16c, 21 a, 21 c).

2. Cardan selon la revendication 1, **caractérisé en ce que** les deux pivots (10, 11) et les pièces de liaison (50a, 50b, 16a, 16c, 21 a, 21 c) sont réalisés dans une pièce monobloc.

3. Cardan selon l'une des revendications 1 ou 2, **caractérisé en ce que** la bague interne (16, 21) de chaque pivot est montée flottante et **en ce que** le cadre externe (15, 20) de chaque pivot est constitué d'une première partie de cadre intermédiaire (15b, 20b) contenant l'axe Z et de deux parties de cadre extérieures (15a, 15c), respectivement (20a, 20c), situées parallèlement et de part et d'autre de la partie de cadre intermédiaire (15b, 20b), et **en ce que** les deux pièces de liaison (50a, 50b) ont un axe longitudinal central creux coïncidant avec l'axe Z et sont reliées aux parties de cadre intermédiaires (15b, 20b) de chaque pivot (10, 11).

4. Cardan selon la revendication 3, **caractérisé en ce qu'**il comporte deux pièces mécaniques de liaison (50a, 50b), **en ce que** chaque pièce mécanique de liaison (50a, 50b) comporte quatre bras espacés angulairement et disposés en forme de croix, **en ce que** deux premiers bras de chaque croix, sont diamétralement opposés l'un par rapport à l'autre et fixés sur la partie de cadre intermédiaire (15b) du premier pivot (10), et **en ce que** deux seconds bras de chaque croix sont diamétralement opposés l'un par rapport à l'autre et fixés sur la partie de cadre intermédiaire (20b) du deuxième pivot (11).

5. Cardan selon la revendication 3, **caractérisé en ce qu'**il comporte deux pièces mécaniques de liaison (50a, 50b) et **en ce que** chaque pièce mécanique de liaison (50a, 50b) a une forme de pavé annulaire, chaque pavé annulaire étant solidaire des deux parties de cadre intermédiaires respectives (15b, 20b) du premier pivot (10) et du deuxième pivot (11).

6. Cardan selon l'une des revendications 1 ou 2, **caractérisé en ce que** le cadre externe (15, 20) de chaque pivot est monté flottant, **en ce que** la bague interne (16, 21) de chaque pivot est constituée d'une partie de bague intermédiaire (16b, 21 b) contenant l'axe Z et de deux parties de bague extérieures (16a, 16c, 21 a, 21 c) situées parallèlement et de part et d'autre de la partie de bague intermédiaire (16b, 21 b), et **en ce que** les deux parties de bague extérieures (16a, 16c) du pivot (10) sont respectivement solidaires des deux parties de bague extérieures (21a, 21c) du pivot (11) et lient d'une manière rigide les deux pivots (10, 11) entre eux.

7. Cardan selon la revendication 6, **caractérisé en ce que** les quatre parties de bague extérieures (16a, 16c, 21a, 21c) des deux pivots forment un ensemble monobloc commun aux deux pivots (10, 11).

8. Engin spatial comportant au moins un cardan selon l'une des revendications précédentes.

## Patentansprüche

1. Kompaktes, flexibles Kardangelenk, das Folgendes umfasst: eine hohle mittlere Längsachse Z, zwei orthogonal zueinander montierte hohle Drehgelenke (10, 11), die jeweils um eine Drehachse X, Y schwenken können, wobei die drei Achsen X, Y, Z orthogonal zueinander sind und sich in einem Drehpunkt kreuzen, der sich in der Mitte des Kardangelenks befindet, wobei jeder Drehpunkt (10, 11) einen ringförmigen äußeren Rahmen (15, 20) umfasst, der entlang einer Ebene, die die mittlere Längsachse Z beinhaltet, und orthogonal zur Drehachse X bzw. Y des Drehgelenks verläuft, einen hohlen inneren Ring (16, 21) koaxial zu dem äußeren Rahmen und mehrere Sätze von flexiblen Platten (12, 17, 18, 19), die mit dem äußeren Rahmen (15, 20) und dem inneren Ring (16, 21) verbunden sind, wobei die zwei Drehgelenke (10, 11) durch starre Verbindungsteile (50a, 50b, 16a, 16c, 21a, 21c) miteinander verbunden sind.

2. Kardangelenk nach Anspruch 1, **dadurch gekennzeichnet, dass** die zwei Drehpunkte (10, 11) und die Verbindungsteile (50a, 50b, 16a, 16c, 21a, 21c) als einstückiges Teil erzeugt werden.

3. Kardangelenk nach Anspruch 1 oder 2, **dadurch gekennzeichnet, dass** der innere Ring (16, 21) jedes Drehgelenks schwebend montiert ist, und dadurch, dass der äußere Rahmen (15, 20) jedes Drehgelenks aus einem ersten Zwischenrahmenteil (15b, 20b), der die Achse Z beinhaltet, und aus zwei äußeren Rahmenteilen (15a, 15c) gebildet ist, die sich jeweils (20a, 20c) parallel zu und auf beiden Seiten des Zwischenrahmenteils (15b, 20b) befinden, und dadurch, dass die beiden Verbindungsteile (50a, 50b) eine hohle mittlere Längsachse aufweisen, die mit der Achse Z zusammenfällt, und mit den Zwischenrahmenteilen (15b, 20b) jedes Drehgelenks (10, 11) verbunden sind.

4. Kardangelenk nach Anspruch 3, **dadurch gekennzeichnet, dass** es zwei mechanische Verbindungsteile (50a, 50b) umfasst, dadurch, dass jedes mechanische Verbindungsteil (50a, 50b) vier Arme umfasst, die winkelmäßig getrennt und kreuzförmig angeordnet sind, dadurch, dass zwei erste Arme jedes Kreuzes einander diametral gegenüber liegen und am Zwischenrahmenteil (15b) des ersten Drehgelenks (10) befestigt sind, und dadurch, dass zwei zweite Arme jedes Kreuzes einander diametral gegenüber liegen und am Zwischenrahmenteil (20b) des zweiten Drehgelenks (11) befestigt sind.

5. Kardangelenk nach Anspruch 3, **dadurch gekennzeichnet, dass** es zwei mechanische Verbindungsteile (50a, 50b) umfasst, und dadurch, dass jedes mechanische Verbindungsteil (50a, 50b) die Form eines ringförmigen Blocks hat, wobei jeder ringförmige Block einstückig mit zwei jeweiligen Zwischenrahmenteilen (15b, 20b) des ersten Drehgelenks (10) und des zweiten Drehgelenks (11) ist.

6. Kardangelenk nach Anspruch 1 oder 2, **dadurch gekennzeichnet, dass** der äußere Rahmen (15, 20) jedes Drehgelenks schwebend montiert ist, dadurch, dass der innere Ring (16, 21) jedes Drehgelenks von einem ersten Zwischenring (16b, 21b), der die Z-Achse beinhaltet, und zwei äußeren Ringteilen (16a, 16c, 21a, 21c) gebildet wird, die sich parallel und auf beiden Seiten des Zwischenringteils (16b, 21b) befinden, und dadurch, dass die zwei äußeren Ringteile (16a, 16c) des Drehgelenks (10) jeweils einstückig mit zwei äußeren Ringteilen (21a, 21c) des Drehgelenks (11) sind und die beiden Drehgelenke (10, 11) starr miteinander verbinden.

7. Kardangelenk nach Anspruch 6, **dadurch gekennzeichnet, dass** die vier äußeren Ringteile (16a, 16c, 21a, 21c) der beiden Drehgelenke eine einstückige Baugruppe bilden, die den beiden Drehgelenken (10, 11) gemeinsam ist.

8. Raumfahrzeug, das wenigstens ein Kardangelenk nach einem der vorherigen Ansprüche umfasst.

## Claims

1. A compact flexible cardan joint, comprising a hollow central longitudinal axis Z, two hollow pivots (10, 11) mounted orthogonally to each other and being capable of respectively pivoting about an axis of rotation X, Y, with the three axes X, Y, Z being orthogonal to each other and intersecting at a point of rotation located at the centre of said cardan joint, each pivot (10, 11) comprising an annular outer frame (15, 20) extending along a plane containing said central longitudinal axis Z and orthogonal to the axis of rotation X and Y, respectively, of said pivot, a hollow inner ring (16, 21) coaxial to said outer frame and a plurality of sets of flexible blades (12, 17, 18, 19) connected to said outer frame (15, 20) and to said inner ring (16, 21), and with said two pivots (10, 11) being connected to each other by rigid connection parts (50a, 50b, 16a, 16c, 21a, 21c).

2. The cardan joint according to claim 1, **characterised in that** said two pivots (10, 11) and said connection parts (50a, 50b, 16a, 16c, 21a, 21c) are produced as a unitary part.

3. The cardan joint according to claim 1 or 2, **characterised in that** said inner ring (16, 21) of each pivot is mounted in a floating manner, and **in that** said outer frame (15, 20) of each pivot is formed of a first intermediate frame part (15b, 20b) containing the axis Z and of two outer frame parts (15a, 15c) and (20a, 20c), respectively, located parallel to and either side of the intermediate frame part (15b, 20b), and **in that** the two connection parts (50a, 50b) have a hollow central longitudinal axis that coincides with the axis Z and are connected to the intermediate frame parts (15b, 20b) of each pivot (10, 11).

4. The cardan joint according to claim 3, **characterised in that** it comprises two mechanical connection parts (50a, 50b), **in that** each mechanical connection part (50a, 50b) comprises four arms that are angularly separated and arranged in the shape of a cross, **in that** two first arms of each cross are diametrically opposed to each other and fixed to the intermediate frame part (15b) of said first pivot (10), and **in that** two second arms of each cross are diametrically opposed to each other and fixed to the intermediate frame part (20b) of said second pivot (11).

5. The cardan joint according to claim 3, **characterised in that** it comprises two mechanical connection parts (50a, 50b) and **in that** each mechanical connection part (50a, 50b) is in the shape of an annular block, with each annular block being integral with the two respective intermediate frame parts (15b, 20b) of said first pivot (10) and of said second pivot (11).

6. The cardan joint according to claim 1 or 2, **characterised in that** said outer frame (15, 20) of each pivot is mounted in a floating manner, **in that** said inner ring (16, 21) of each pivot is formed of a first intermediate ring (16b, 21b) containing the axis Z and of two outer ring parts (16a, 16c, 21a, 21c) located parallel to and either side of said intermediate ring part (16b, 21b), and **in that** said two outer ring parts (16a, 16c) of said pivot (10) are respectively integral with said two outer ring parts (21a, 21c) of said pivot (11) and rigidly connect said two pivots (10, 11) with each other.

7. The cardan joint according to claim 6, **characterised in that** said four outer ring parts (16a, 16c, 21a, 21c) of said two pivots form a unitary assembly common to said two pivots (10, 11).

8. A spacecraft comprising at least one cardan joint according to any one of the preceding claims.
